# EUROPEAN PATENT SPECIFICATION

(11) **EP 1 621 414 B1**
(45) Date of publication and mention of the grant of the patent: **03.09.2008**
(21) Application number: 05015203.2
(22) Date of filing: 13.07.2005
(51) Int. Cl.: B60R 21/20

(54) **Airbag apparatus**
Gassackvorrichtung
Dispositif de coussin gonflable

(30) Priority: 30.07.2004 JP 2004224131; 30.07.2004 JP 2004224132
(43) Date of publication of application: 01.02.2006
(73) Proprietor: TAKATA CORPORATION, Minato-ku, Tokyo 106-8510 (JP)
(72) Inventor: Tsujimoto, Kei, Minato-ku Tokyo 106-8510 (JP); Matsui, Yoshitaka, Minato-ku Tokyo 106-8510 (JP); Nakazawa, Wataru, Minato-ku Tokyo 106-8510 (JP)
(74) Representative: Banzer, Hans-Jörg

(56) References cited:
- EP-A- 0 958 970
- US-A1- 2003 085 554

## Description

The present invention relates to an airbag apparatus and, more specifically, to an airbag apparatus including a column-shaped inflator for injecting pressurized fluid, a retainer for supporting the bottom side of the inflator, and an airbag plate located on the upper side of the inflator for clamping an opening edge of the airbag on the bottom surface thereof in cooperation with the retainer when being engaged with the retainer.

Hitherto, an airbag apparatus wherein an inflator is caused to inject pressurized fluid upon detection of an impact in association with collision of a vehicle and thereby causes an airbag body to be inflated by the pressurized fluid is publicly known.

Such an airbag apparatus typically includes a column-shaped inflator for injecting pressurized fluid, a retainer for supporting the bottom side of the inflator, and an airbag plate located on the upper side of the inflator for clamping an opening edge of the airbag body on the bottom surface thereof when being engaged with the retainer.

One end of a bracket is fixed to the retainer, and the other end of the bracket is fixed to a vehicle body, whereby the entire airbag apparatus is fixed to the vehicle body.

Frequently, the airbag plate is formed with an arched portion having substantially semi-column shape extending along the shape of the upper surface of the retainer, and a flange portion laid along both longitudinal edges of the arched portion. The flange portion is provided with a plurality of pins for engaging the retainer in a state of being penetrated through a plurality of locations near both longitudinal edges of a bottom opening formed on the airbag body for introducing the pressurized fluid so as to project therefrom. In addition, tongue strips shaped like an arrow tip so as to penetrate the portion near both widthwise edges of the bottom opening of the airbag body can be formed on both ends of the airbag plate by cutting out and raising the same.

Accordingly, in the airbag apparatus configured as described above, although both ends of the bottom side of the inflator are supported by the retainer, both ends of the upper side of the inflator are in the free state.

Therefore, there arises a problem that a relative positioning of the airbag plate and the inflator in the thrust direction is not stable and hence rattle may be generated due to vibrations during travel of the vehicle.

In order to solve the above-described problem, it is an object of the present invention to provide an airbag apparatus in which a relative positioning of the airbag plate and the inflator in the thrust direction can be established and generation of rattle in association with vibrations during travel of the vehicle can be prevented by maintaining the positioning state.

US 2003/0085554 A discloses a housing assembly for an airbag system having the features defined by the preamble of claim 1.

EP 1 300 298 A discloses an airbag module in which an inflator is disposed in an airbag housing so that, in an axial direction, the inflator is positioned between a transverse wall of the airbag housing and a securing element provided on a cover of the housing.

According to the present invention, this object is achieved by an airbag apparatus according to claim 1. The dependent claims define preferred and advantageous embodiments of the present invention.

In order to achieve the object, an airbag apparatus according to the invention is an airbag apparatus including a retainer for supporting the bottom side of a column-shaped inflator which can inject pressurized fluid, and an airbag plate located on the upper side of the inflator for clamping the edge of a bottom opening of an airbag body in cooperation with the retainer when being engaged with the retainer, wherein the airbag plate is formed with means for positioning the inflator which come into abutment with both ends of the inflator.

According to one aspect of the airbag apparatus of the invention, the means for positioning the inflator include tongue strips.

Tongue strips shaped like an arrow tip are provided on the airbag plate so as to penetrate positions near both widthwise edges of a bottom opening of the airbag body.

Furthermore, the tongue strips may be formed integrally with the airbag plate by cutting out and raising the same.

According to the invention, the means for positioning the inflator may include shoulders formed on the airbag plate which come into abutment with both ends of the inflator.

The shoulders are substantially tapered-shape.

According to the airbag apparatus of the present invention, the bottom side of the column-shaped inflator for injecting the pressurized fluid is supported by the retainer, the edge of the bottom opening of the airbag body is clamped between the airbag plate and the retainer simultaneously when the airbag plate located on the upper side of the inflator is engaged with the retainer, and by the provision of the means for positioning the inflator which come into abutment with both ends of the inflator on the airbag plate, relative positioning of the airbag plate and the inflator in the thrust direction can be achieved, and the positioning state can be maintained.

According to an embodiment of the airbag apparatus of the present invention, since the tongue strips are shaped like an arrow tip which penetrates the positions near both widthwise edges of the bottom opening of the airbag body, the both widthwise edges of the bottom opening are positioned by the tongue strips.

Furthermore, according to an embodiment of the airbag apparatus of the present invention, since the tongue strips can be formed integrally with the airbag plate by cutting out and raising the same, relative positioning of the airbag plate and the inflator in the thrust direction can be achieved without increasing the number of components.

Furthermore, according to the airbag apparatus of the present invention, since the shoulders are provided on the airbag plate, the positioning can be achieved without providing a specific both-ends fixture.

Subsequently, preferred embodiments of the present invention will be described with reference to the accompanying drawings.
Fig. 1 is a cross-sectional view of an airbag apparatus according to a background example that does not represent an embodiment of the present invention.
Fig. 2 is a perspective view of an airbag plate constituting the airbag apparatus according to the background example of Fig. 1.
Fig. 3(A) is a perspective view of an airbag body, Fig. 3(B) is a bottom view of a principal portion of the airbag body.
Fig. 4(A) is a side view of the airbag apparatus according to the background example of Fig. 1, and Fig. 4(B) is a front view of the airbag apparatus according to the background example of Fig. 1.
Fig. 5 is a cross-sectional view of an embodiment of an airbag apparatus of the present invention.
Fig. 6 is a perspective view of an airbag plate constituting the airbag apparatus according to the embodiment of the present invention.
Fig. 7 is a side view of the airbag plate constituting the airbag apparatus according to the embodiment of the present invention.

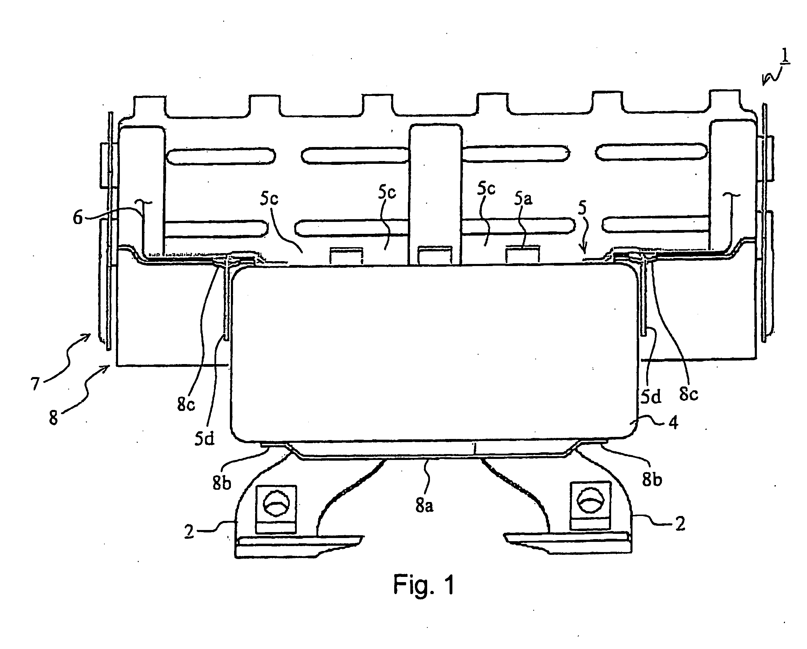

A background example which is, however, not an embodiment of the invention will be described below with reference to Figs. 1-4.

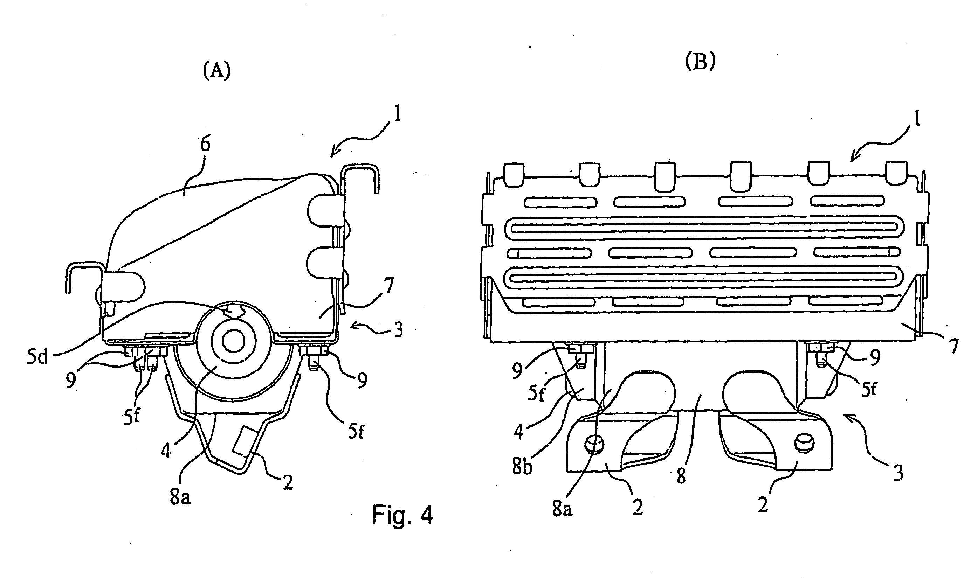

According to the background example, as shown in Fig. 4, an airbag apparatus 1 includes a retainer 3 having a plurality of fixing brackets 2 to a vehicle body, not shown, a column-shaped inflator 4 supported by the retainer 3 on the bottom side, an airbag plate 5 for supporting the upper side of the inflator 4, and an airbag body 6 clamped between the retainer 3 and the airbag plate 5.

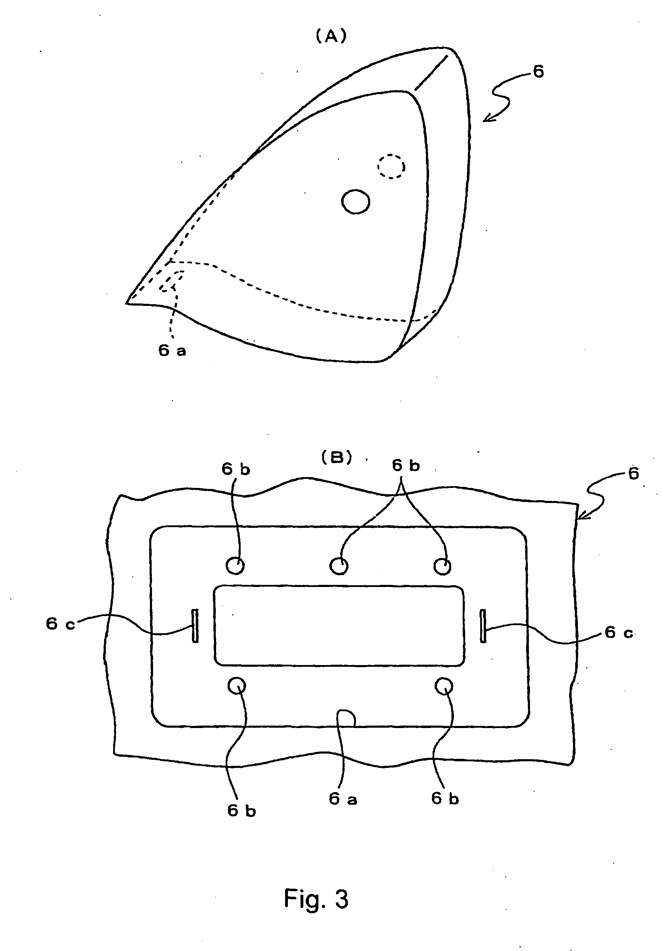

When the inflator 4 is activated and pressurized fluid is injected and, as shown in Fig. 3, the airbag body 6 is inflated and deployed by the pressurized fluid being introduced from a bottom opening 6a thereof. An opening edge of the bottom opening 6a is formed with five through holes 6b at the positions near longitudinal opening edges, and is formed with one each of slit 6c at the positions near both widthwise edges.

As shown in Fig. 1, the retainer 3 includes a substantially box-shaped upper retainer 7, and a lower retainer 8 fixed in the upper retainer 7. The airbag body 6 is folded and stored in the upper retainer 7 so as to be inflated and deployed in a predetermined sequence. The lower retainer 8 is formed with a depression at the center portion thereof by punching or the like so as to be positioned on the bottom side and the upper side of the inflator 4, and a center portion 8a on the bottom side is bent in the semi-hexagonal shape in cross-section and both side portions 8b are formed into a semi-circular shape. Both end portions located on the upper side of the inflator 4 are formed with elongated holes 8c at positions substantially corresponding to both ends of the inflator 4.

The inflator 4 is a device for generating gas for inflating and deploying the airbag body 6. The inflator 4 itself may be the one provided in the related art. For example, two types of inflators 4 are available, such as compressed gas type and combustion gas type, and are selected for use as needed.

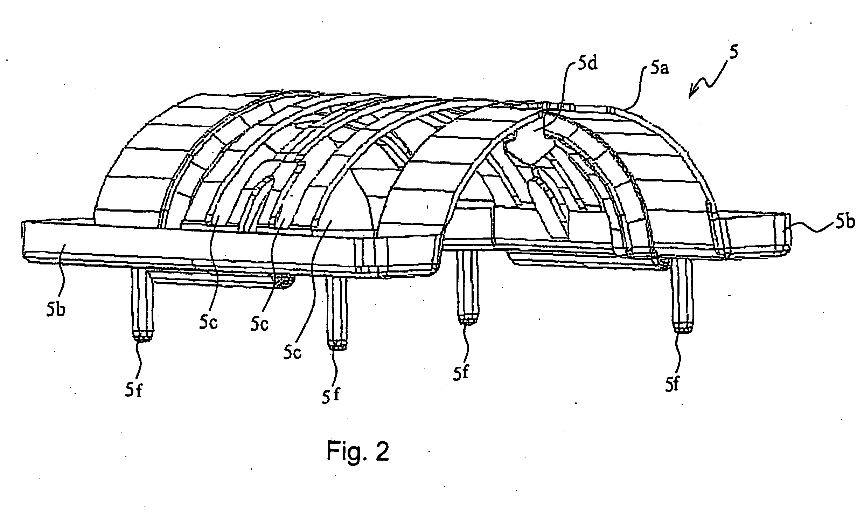

The airbag plate 5 is for fixing the airbag body 6 and the inflator 4 inside the retainer 3. As is most clearly shown in Fig. 2, the airbag plate 5 includes an arched portion 5a formed into a semi-circular arch shape, and a flange portion 5b formed at both longitudinal edges of the arched portion 5a.

At the center of the arched portion 5a, four square openings 5c for allowing gas from the inflator 4 to pass through are formed. At left and right outer edges of the arched portion 5a, tongue strips 5d shaped like an arrow tip are cut out and raised therefrom. The tongue strips 5d penetrate through the slits 6c of the airbag body 6. According to the fist embodiment of the invention, the tongue strips 5d are formed such that they come into abutment with both end surface of the inflator 4 in a state wherein they penetrate the elongated holes 8c in an assembled state. Accordingly, both ends of the inflator 4 are positioned.

The flange portion 5b is provided with bolt portions 5f for fixing the airbag plate 5 to the lower retainer 8 via nuts 9 after having penetrated through the through holes 6b of the airbag body 6 and the through holes (not shown) provided on the lower retainer 8.

Subsequently, an assembling state of the airbag apparatus 1 will be described.

In the airbag apparatus 1 according to this background example, the airbag body 6 is assembled to the airbag plate 5. This is achieved by passing the tongue strips 5d through the slits 6c shown in Fig. 3 from the inner side of the airbag 6 and by passing the bolt portions 5f through the through holes 6b, respectively, in a state in which the arched portion 5a exposes itself in the bottom opening 6a of the airbag body 6. In this case, by providing an odd number of bolt portions 5f (five in this embodiment), erroneous assembly of the airbag plate 5 relative to the airbag body 6 is prevented.

Subsequently, the airbag plate 5 integrated with the airbag body 6 is disposed inside the upper retainer 7 with the inflator 4 supported by the lower retainer 8. In this case, the tongue strips 5d penetrate the elongated holes 8c of the lower retainer 8, and the bolt portions 5f penetrate the through holes.

Accordingly, a peripheral edge of the bottom opening 6a of the airbag body 6 is clamped between the airbag plate 5 and the lower retainer 8 and both ends of the inflator 4 are positioned by the tongue strips 5d.

Then, by tightening the nuts 9 completely onto the bolt portions 5f, the airbag body 6 is completely clamped by the airbag plate 5 and the lower retainer 8, and the inflator 4 is clamped between the lower retainer 8 and the airbag plate 5.

The airbag apparatus 1 is fixed in the vehicle body by the bracket 2. For example, when it is used as a passenger airbag apparatus (for protecting a passenger's head, upper body or lower legs), it is fixed in an instrument panel for the vehicle.

In the airbag apparatus 1 as described above, the airbag body 6 is normally folded and stored in the upper retainer 7 in a folded state. When the vehicle collides in this state, the sensor, not shown, detects this collision and sends an ignition signal to the inflator 4, whereby pressurized fluid is injected from the inflator 4. The injected pressurized fluid passes through the square opening 5c of the airbag plate 5, and is supplied into the airbag body 6.

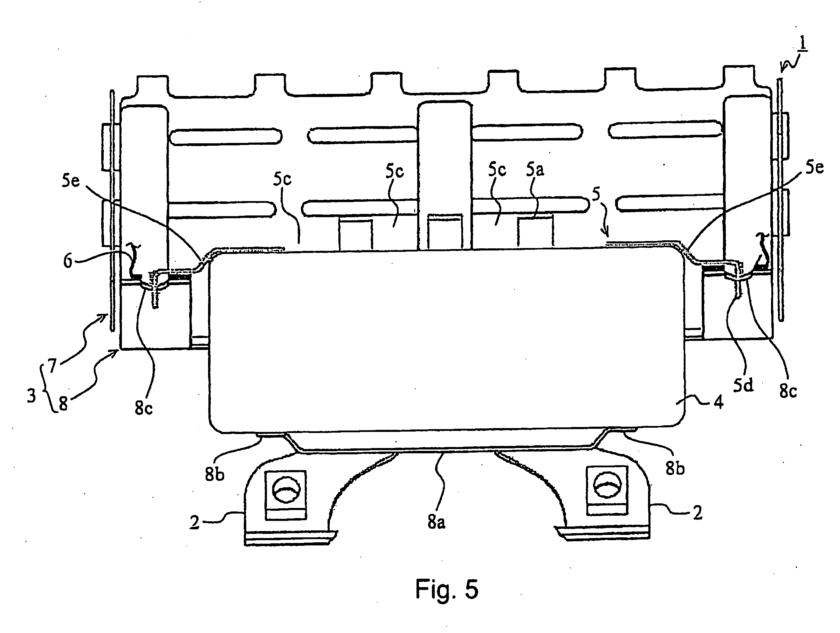

Next, an embodiment of the invention will be described with reference to Figs. 5-7. The basic configuration of the airbag apparatus according to the embodiment of the invention is similar to that of the background example described with reference to Fig. 4 above. In particular, the airbag apparatus 1 according to the embodiment again comprises a retainer 3 including an upper retainer 7 and a lower retainer 8, a column-shaped inflator 4, and an airbag body 6, all of which are formed as described for the first embodiment above. Similarly, the operation of the airbag apparatus is as described above.

Hence, the description of the embodiment will be focused on those parts which are different from the background example, in particular, the configuration of the airbag plate 5.

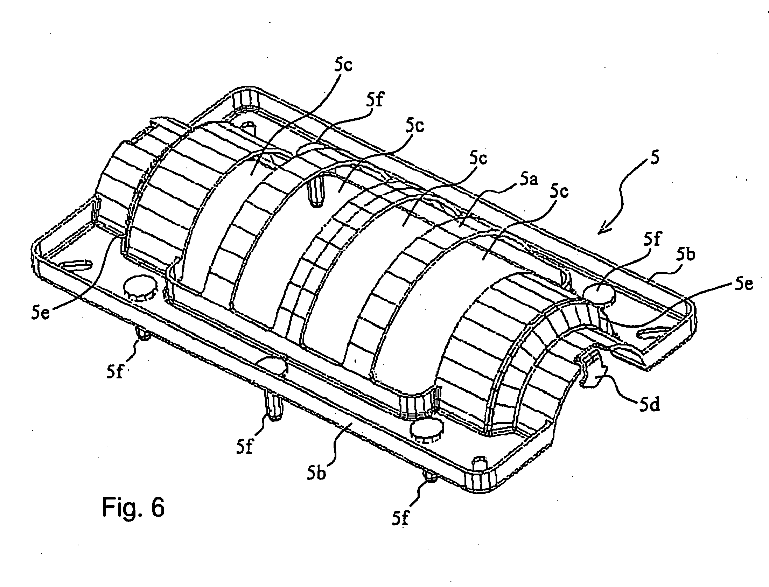

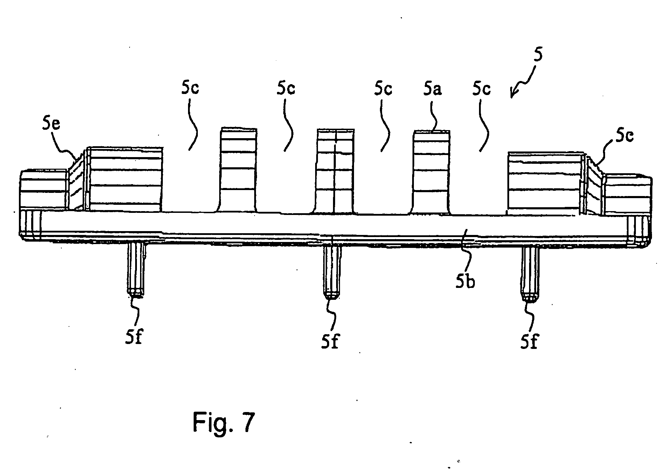

Again, as is most clearly shown in Figs. 6 and 7, the airbag plate 5 includes an arched portion 5a formed into a semi-circular arch shape, and a flange portion 5b formed at both longitudinal edges of the arched portion 5a.

At the center of the arched portion 5a, four square openings 5c for allowing gas from the inflator 4 to pass through are formed. At left and right outer edges of the arched portion 5a, tongue strips 5d shaped like an arrow tip are cut out and raised therefrom. The tongue strips 5d penetrate through the slits 6c of the airbag body 6. According to the embodiment of the invention, two shoulders 5e are provided on the airbag plate 5. Each shoulder 5e is formed between the arched portion 5a and the tongue strip 5d. The shoulders 5e have a tapered-shape increasing in width upward, and in the assembled state, come into abutment with both ends of the inflator 4. Accordingly, both ends of the inflator 4 are positioned.

The assembly of the airbag apparatus according to this embodiment is again similar to the one of the background example described above, the main difference being that, due to the different configuration of the airbag plate 5, a peripheral edge of the bottom opening 6a of the airbag body 6 is clamped between the airbag plate 5 and the lower retainer 8 and both ends of the inflator 4 are positioned by the shoulders 5e.

## Claims

1. An airbag apparatus (1), comprising:
an inflator (4);
a retainer (3) for supporting the bottom side of the column-shaped inflator (4) which can inject pressurized fluid; and
an airbag plate (5), which is located on the upper side of the inflator (4) for clamping the edge of a bottom opening of an airbag body (6) in cooperation with the retainer (3) when being engaged with the retainer (3),
wherein the airbag plate (5) is formed with means (5d; 5e) for positioning the inflator (4) which come into abutment with both ends of the inflator (4),
wherein the means for positioning the inflator is formed with shoulders (5e) formed on the airbag plate (5),
**characterized in that** the shoulders (5e) come into abutment with both ends of the inflator (4) and substantially have a tapered-shape, and that tongue strips (5d) formed on the airbag plate (5) are shaped like an arrow tip so as to penetrate positions near both widthwise edges of the bottom opening of the airbag body (6).

2. The airbag apparatus (1) according to claim 1,
**characterized in that** the means for positioning the inflator is formed with the tongue strips (5d) which come into abutment with both ends of the inflator (4).

3. The airbag apparatus (1) according to claim 1 or 2,
**characterized in that** the tongue strips (5d) are formed integrally with the airbag plate (5) by cutting out and raising the same.

## Patentansprüche

1. Airbagvorrichtung (1), umfassend
eine Aufblaseinrichtung (4),
eine Halteeinrichtung (3) zum Stützen der Unterseite der säulenförmigen Aufblaseinrichtung (4), die ein unter Überdruck stehendes Fluid einspeisen kann, und
eine Airbag-Platte (5), die an der Oberseite der Aufblaseinrichtung (4) angeordnet ist, um, wenn sie sich mit der Halteeinrichtung (3) in Eingriff befindet, zusammenwirkend mit der Halteeinrichtung (3) den Rand einer Bodenöffnung eines Airbagkörpers (6) festzuklemmen,
wobei die Airbag-Platte (5) mit Mitteln (5d; 5e) zum Positionieren der Aufblaseinrichtung (4) ausgebildet ist, welche mit beiden Enden der Aufblaseinrichtung (4) in Anlage kommen,
wobei die Mittel zum Positionieren der Aufblaseinrichtung mit an der Airbag-Platte (5) ausgebildeten Schultern (5e) ausgebildet sind,
**dadurch gekennzeichnet, dass** die Schultern (5e) mit beiden Enden der Aufblaseinrichtung (4) in Anlage kommen und im Wesentlichen eine verjüngte Form aufweisen, und dass an der Airbag-Platte (5) ausgebildete Zungenstreifen (5d) pfeilspitzenartig ausgeformt sind, um so durch Positionen nahe an beiden Rändern in Breitenrichtung der Bodenöffnung des Airbagkörpers (6) durchzutreten.

2. Airbagvorrichtung (1) nach Anspruch 1,
**dadurch gekennzeichnet, dass** die Mittel zum Positionieren der Aufblaseinrichtung mit den Zungenstreifen (5d) ausgebildet sind, welche mit beiden Enden der Aufblaseinrichtung (4) in Anlage kommen.

3. Airbagvorrichtung (1) nach Anspruch 1 oder 2,
**dadurch gekennzeichnet, dass** die Zungenstreifen (5d) integral mit der Airbag-Platte (5) ausgebildet sind, indem diese ausgeschnitten und angehoben werden.

## Revendications

1. Un dispositif pour coussin gonflable de sécurité (1) comprenant :
un gonfleur (4) ;
un dispositif de retenue (3) pour supporter le côté inférieur du gonfleur en forme de colonne (4) qui peut injecter du fluide pressurisé ; et
un plateau de coussin gonflable de sécurité (5), qui est situé sur le côté
supérieur du gonfleur (4) pour bloquer la bordure d'une ouverture inférieure d'un corps de coussin gonflable de sécurité (6) en coopération avec le dispositif de retenue (3) lorsqu'il est mis en prise avec le dispositif de retenue (3),
dans lequel le plateau de coussin gonflable de sécurité (5) est formé avec des moyens (5d ; 5e) pour positionner le gonfleur (4) qui viennent en butée avec les deux extrémités du gonfleur (4),
dans lequel les moyens pour positionner le gonfleur sont formés avec des rebords (5e) formés sur le plateau de coussin gonflable (5),
**caractérisé en ce que** les rebords (5e) viennent en butée avec les deux extrémités du gonfleur (4) et ont une forme substantiellement conique, et que des bandes sous formes de languette (5d) formés sur le plateau de coussin gonflable de sécurité (5) sont usinées en forme de pointe de flèche pour pénétrer dans des endroits situés près des deux bordures dans le sens de la largeur de l'ouverture inférieure du corps du coussin gonflable de sécurité (6).

2. Le dispositif de coussin gonflable de sécurité (1) selon la revendication 1,
**caractérisé en ce que** les moyens pour positionner le gonfleur sont formés avec les bandes sous formes de languette (5d) qui entrent en butée avec les deux extrémités du gonfleur (4).

3. Le dispositif de coussin gonflable de sécurité (1) selon la revendication 1 ou 2,
**caractérisé en ce que** les bandes sous formes de languette (5d) sont formés intégralement avec le plateau du coussin gonflable de sécurité (5) en découpant et soulevant celui-ci.
